# EUROPEAN PATENT SPECIFICATION

(11) **EP 0 454 297 B1**
(45) Date of publication and mention of the grant of the patent: **13.05.1998**
(21) Application number: 91302227.3
(22) Date of filing: 15.03.1991
(51) Int. Cl.: H04M 1/04, B60R 11/02

(54) **Holder for a portable telephone**
Aufnahmevorrichtung für ein tragbares Telefon
Support pour un téléphone portable

(30) Priority: 12.04.1990 GB 9008455
(43) Date of publication of application: 30.10.1991
(73) Proprietor: NOKIA MOBILE PHONES (U.K.) LIMITED, Camberley, Surrey GU15 3SP (GB)
(72) Inventor: Sheldrake, Christopher, Basingstoke, Hampshire RG24 0RD (GB)
(74) Representative: Frain, Timothy John

(56) References cited:
- DE-A- 1 905 796
- US-A- 4 325 142
- US-A- 4 406 928
- US-A- 4 617 430

## Description

This invention relates to a holder for a portable telephone, particularly but not exclusively suitable for use within a vehicle.

Cellular radio telephones fall into two main categories, namely mobiles and hand portables, although there is also an intermediate category known as transportables. As the name implies, a hand portable telephone is relatively lightweight and small in size and operates from an internal, rechargeable battery pack so that it may readily be carried around by the user. A mobile telephone, on the other hand, is permanently installed in a vehicle and operates from the vehicles' own (higher voltage) power supply. A mobile has the advantage over a hand portable that it can transmit at a higher power level, but a hand portable has the advantage that the user does not need to be in or near a vehicle to use the telephone, since it can be used anywhere within range of a base station including inside a vehicle.

For use of a portable telephone inside a vehicle it is convenient to provide a telephone holder mounted for example on the dashboard or the centre console so that the telephone is readily accessible and can be easily removed from the holder by the driver.

For example in their data sheet No. 050 7449 304036 (03.90) relating to the so-called "Miniporty" Telephone for use on the West German "Netz C" cellular system, Philips disclose an in-car holder (reference No. GHA 61) having a generally open front which is evidently designed to act in the manner of a cradle, whereby the telephone can be inserted through the open front. The holder is also provided with a recess in the top-wall, but this is merely to enable the insertion of a smart-card in the telephone when the telephone is in the holder. In further promotional literature, see especially brochure reference WV 6013/9003/10 it appears that the cradle is designed for horizontal mounting on the central console of a vehicle, i.e. so that the telephone is also held in a substantially horizontal, or face-up attitude.

US Patent No. 4,527,018 discloses a support for a one-piece telephone comprising a saddle-like cradle made of a slightly resilient or semi rigid material. The earpiece of the telephone can be inserted through the front of the cradle. The support comprises a projection at its top end which bears against the earpiece and helps to hold the telephone in place when it is in the cradle. This projection prevents the telephone from being inserted other than through the front of the cradle.

On the other hand, US Patent No. 4,355,212 discloses a cup-shaped cradle wherein the telephone is slidably inserted through an open top portion of the cradle. There is no other manner in which the telephone can be inserted into the cradle.

British Patent No. 1,093,062 discloses an adaptor made of resilient material for attaching a telephone handset to an operator's headband. The handset can be inserted into the adaptor in one direction only, i.e. by sliding it longitudinally through an open end part of the adaptor.

US Patent No. 4,406,928 discloses a multi-purpose telephone holder adapted to hold a compact telephone subject in three different orientations. The assembly has a bottom surface, two side retaining arms and two bottom arms for holding the subset. Due to the flexibility of the side clips the user can grasp the telephone and easily to remove the same from the holder as desired.

US Patent No. 4,325,142 discloses a portable radio set with a carrying holder. The radio unit is formed on the opposite lateral sides of its casing with grooves for sliding engagement with opposite flanges formed on the carrying holder.

US Patent No. 4,617,430 discloses a swivel mount with locking screw and a spherical nut.

According to the present invention there is provided a holder for a portable telephone, the holder having a generally open front and an open top and comprising a rear wall, a base and two side walls, thereby defining receiving means characterised in that the side walls comprise means for releasably retaining the telephone when it is inserted in the receiving means, the receiving means being adapted to allow the telephone to be inserted either by sliding it through the open top or by urging it through the open front.

A holder in accordance with the invention has the advantage that the telephone can be inserted in either of two ways, namely by sliding it down through the open top of the receiving means or by urging it (transversely) through the open front of the receiving means. The holder therefore offers versatility which is particularly useful for mounting within the vehicle environment, where mounting locations and accessibility may vary significantly from vehicle to vehicle.

The receiving means comprises a rear wall, a base and two side walls. Suitably, in a specific embodiment the telephone retaining means is formed by a respective lip provided on the front edge of said two side walls. Preferably the lips are made of compliant material, enabling the telephone to be urged past the lips through the open front into the receiving means, whereupon the lips then act to hold the telephone in place in the manner of a clip.

In a preferred embodiment the whole of the receiving means is formed as a unitary member of a compliant material, e.g. as a one-piece elastomeric plastics moulding.

When the holder is used in a vehicle the compliant nature of the receiving means offers the further significant advantage of improved safety because it is less likely to inflict any serious injury to the occupants of the vehicle in the event of an accident.

The holder may also include a mounting bracket pivotally connected to said receiving means, whereby the holder can be anchored to a suitable fixing place in the vehicle and the receiving means pivoted to offer the telephone to the driver (or passenger) in the most convenient and accessible position.

An embodiment of the invention will now be described, by way of example with reference to the accompanying drawings, in which:-
Figure 1 is a perspective view of a telephone and a holder in accordance with the invention, and
Figure 2 is a plan view from above of the telephone holder in Figure 1.

The holder 1 in the Figures is intended to receive a portable cellular telephone 2.

The holder 1 comprises a generally U-shaped, pocket-like receptacle 3 having a solid rear wall 4, a base 5 and two side walls 6 and 7. Each of the side walls 6 and 7 comprises a respective inwardly-directed lip 6a and 7a respectively. The receptacle has an open top 8 and a generally open front 9. The general internal configuration of the receptacle 3 complements the external profile of the lower portion of the telephone 2 whereby the telephone 2 can be slidably inserted into the receptacle 3 via the open top 8.

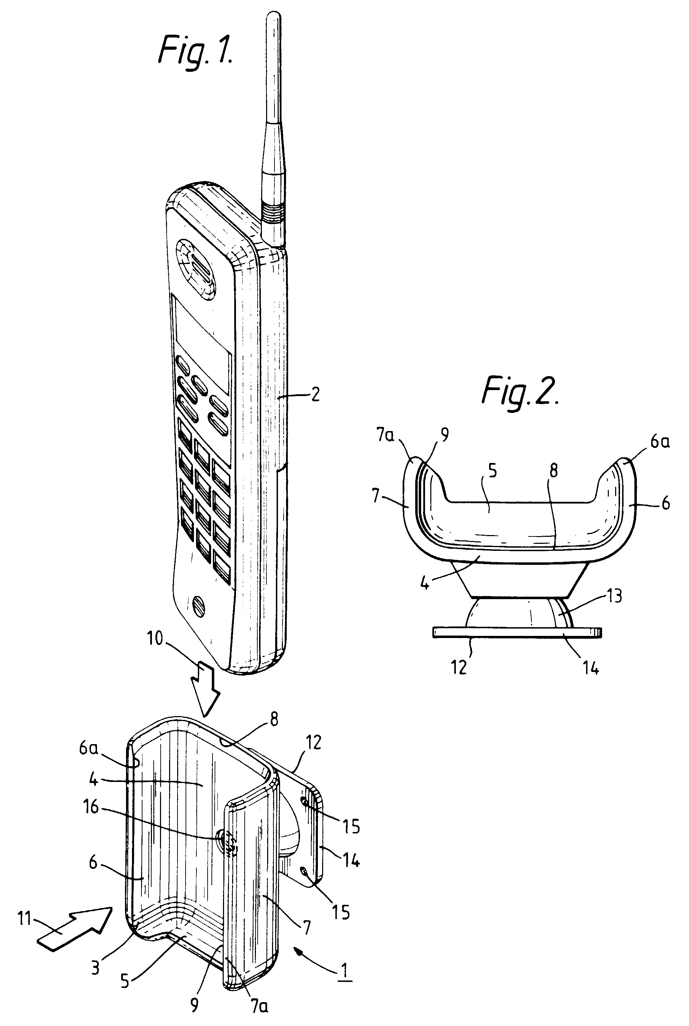

In Figure 1 the telephone 2 is shown with a greater angle of perspective than the holder 1. As shown, the telephone would have to be twisted slightly about its axis towards the reader as indicated by the arrow 10 before it can be slid into the holder 1.

The receptacle 3 is moulded as a one piece unit from an elastomeric material having an International Shore Hardness value in the range of 40-70. The Applicant has found that a suitable material is PEBAX (Registered Trade Mark) available from Atochem S.A. of Paris, France. An alternative material is Hytrel (Trade Mark) available from Du Pont de Nemours International S.A., Geneva, Switzerland.

The resilient and compliant nature of this material enables the telephone 2 to be snap-fitted into the receptacle 3 by urging it through the front open face 9 in the direction of the arrow 11. The side walls 6, 7 and the integral lips 6a, 7a deflect sufficiently to permit the telephone to be fully inserted in the transverse direction. The lips 6a, 7a then resume their former position to hold the telephone in place.

The telephone 2 can of course be removed from the receptacle 3 in the reverse manner to either of the insertion modes. Hence the telephone may be removed by sliding it through the top open face 8, or by urging it through the front open face 9 against the resistance of the lips 6a, 7a which will temporarily yield thus releasing the telephone.

The holder 1 additionally comprises a mounting bracket 12 pivotally connected to the receptacle 3 by a conventional ball and socket arrangement 13. The mounting bracket 12 includes a rear, rectangular plate 14 having a fixing hole 15 located adjacent each of the corners of plate 14. The bracket may thus be fastened to an appropriate mounting location in the car, e.g. to the dashboard or the centre console, using screws. The ball and socket arrangement 13 is suitably fastened to the rear wall 4 of the receptacle 3 by means of a screw 16.

In view of the foregoing description it will be evident to a person skilled in the art that various modifications may be made within the scope of the invention as defined by the claims. For example, the receptacle may have any suitable shape in order to accommodate a particular telephone. Furthermore, the receptacle may be made of any suitable compliant or elastomeric material.

## Claims

1. A holder (1) for a portable telephone (2), the holder having a generally open front (9) and an open top (8) and comprising a rear wall (4), a base (5) and two side walls (6,7), thereby defining receiving means (3) characterised in that
the side walls (6,7) comprise means for releasably retaining the telephone (2) when it is inserted in the receiving means (3), the receiving means (3) being adapted to allow the telephone (2) to be inserted either by sliding it through the open top (8) or by urging it through the open front (9).

2. A holder (1) as claimed in claim 1, wherein the retaining means is formed by a respective lip (6a, 7a) provided on the front edge of said two side walls (6, 7).

3. A holder (1) as claimed in claim 2, wherein at least said lips (6a, 7a) are formed of a compliant material.

4. A holder (1) as claimed in claim 3, wherein at least said lips (6a, 7a) and said side walls (6, 7) are formed of a compliant material.

5. A holder (1) as claimed in any of the preceding claims wherein the receiving means (3) is formed as a unitary member.

6. A holder as claimed in any of the preceding claims wherein the receiving means (3) is formed of elastomeric plastics material.

7. A holder (1) as claimed in claim 6 wherein the elastomeric plastics material has an International Shore Hardness value in the range 40-70.

8. A holder (1) as claimed in any of the preceding claims further including a mounting bracket (12) pivotally connected to said receiving means (3).

9. A holder (1) as claimed in any of the preceding claims arranged to hold the portable telephone (3) generally upright.

## Patentansprüche

1. Aufnahmevorrichtung (1) für ein tragbares Telefon (2), mit einer im wesentlichen offenen Frontseite (9) und einer offenen oberen Seite (8), sowie mit einer Rückwand (4), einer Bodenfläche (5) und zwei Seitenwänden (6,7), wodurch Aufnahmemittel (3) definiert werden, **dadurch gekennzeichnet**, daß die Seitenwände (6,7) Mittel enthalten, um das Telefon (2) zuverlässig zu halten, wenn es in den Aufnahmemitteln (3) eingeführt ist, wobei die Aufnahmemittel (3) entweder ein Einschieben des Telefons (2) über die offene obere Seite (8) oder ein Eindrücken des Telefons (2) über die offene Frontseite (9) ermöglichen.

2. Aufnahmevorrichtung (1) nach Anspruch 1, bei der die Haltemittel durch jeweilige Lippen (6a. 7a) gebildet sind, die auf der zur Frontseite weisenden Kante der zwei Seitenwände (6, 7) angeordnet sind.

3. Aufnahmevorrichtung (1) nach Anspruch 2, bei der mindestens die Lippen (6a, 7a) aus federndem Material gebildet sind.

4. Aufnahmevorrichtung (1) nach Anspruch 3, bei der mindestens die Lippen (6a, 7a) und die Seitenwände (6,7) aus einem federnden Material gebildet sind.

5. Aufnahmevorrichtung (1) nach irgendeinem der vorangegangenen Ansprüche, bei der die Aufnahmemittel (3) eine Einheit bilden.

6. Aufnahmevorrichtung (1) nach irgendeinem der vorangegangenen Ansprüche, bei der die Aufnahmemittel (3) aus einem gummiartigen Kunstsoffmaterial gebildet sind.

7. Aufnahmevorrichtung (1) nach Anspruch 6, bei der die internationale Shorehärte des gummiartigen Kunstoffmaterials in einem Bereich zwischen 40-70 liegt.

8. Aufnahmevorrichtung (1) nach irgendeinem der vorangegangenen Ansprüche, mit einer schwenkbar mit den Aufnahmemitteln (3) verbundenen Befestigungsklammer (12).

9. Aufnahmevorrichtung (1) nach irgendeinem der vorangegangenen Ansprüche, die das tragbare Telefon (3) im wesentlichen senkrecht hält.

## Revendications

1. Support (1) pour un téléphone portable (2), le support ayant une façade essentiellement ouverte (9) et un dessus ouvert (8) et comportant une paroi arrière (4), une base (5) et deux parois de côté (6,7), définissant ainsi un moyen de réception (3) caractérisé en ce que :
les parois de côté (6,7) comportent un moyen pour retenir librement le téléphone (2) lorsque celui-ci est inséré dans le moyen de réception (3), ce moyen de réception (3) étant prévu pour permettre au téléphone d'être inséré soit par glissement au travers du dessus ouvert (8), soit par poussée au travers de la façade ouverte (9).

2. Un support (1) selon la revendication 1, dans lequel la moyen de réception est formé par deux lèvres (6a,7a) prévues respectivement sur le bord frontal desdites parois de côté (6,7).

3. Support (1) selon la revendication 2, dans lequel au moins lesdites lèvres sont formées d'un matériau accommodant.

4. Support (1) selon la revendication 3, dans lequel au moins lesdites lèvres (6a,7a) et lesdites parois (6,7) sont formées d'un matériau accommodant.

5. Support (1) selon l'une quelconque des revendications précédentes, dans lequel le moyen de réception (3) est formé comme un élément unitaire.

6. Support (1) selon l'une quelconque des revendications précédentes, dans lequel le moyen de réception (3) est formé d'un élastomère plastique.

7. Support (1) selon la revendication 6, dans lequel l'élastomère plastique a une valeur de Dureté Shore Internationale (ISH) comprise dans une gamme de 40 à 70.

8. Support (1) selon l'une quelconque des revendications précédentes, comportant en outre un support de montage (12) connecté en pivot audit moyen de réception (3).

9. Support (1) selon l'une quelconque des revendications précédentes, disposé pour supporter le téléphone portable (3) généralement de façon verticale.
